# EUROPEAN PATENT SPECIFICATION

(11) **EP 1 014 264 B1**
(45) Date of publication and mention of the grant of the patent: **18.04.2007**
(21) Application number: 99309854.0
(22) Date of filing: 07.12.1999
(51) Int. Cl.: G06F 9/46

(54) **A system and method for facilitating safepoint synchronization in a multithreaded computer system**
System und Verfahren zum Erleichtern der Synchronisation an sicheren Stellen in einem Mehrdrahtrechnersystem
Système et méthode pour faciliter la synchronisation à des points sûrs dans un système d'ordinateur à plusieurs fils d'exécution

(30) Priority: 07.12.1998 US 206810
(43) Date of publication of application: 28.06.2000
(73) Proprietor: SUN MICROSYSTEMS, INC., Palo Alto, California 94303 (US)
(72) Inventor: Schmidt, Rene W., Cupertino, California 95014 (US)
(74) Representative: Browne, Robin Forsythe

(56) References cited:
- EP-A- 0 747 815
- US-A- 5 842 016
- F. TURBAK: "First-Class Synchronization Barriers" PROCEEDINGS OF THE INTERNATIONAL CONFERENCE ON FUNCTIONAL PROGRAMMING, 1996, XP002240438
- LEIDTKE J: "A SHORT NOTE ON IMPLEMENTING THREAD EXCLUSIVENESS AND ADDRESS SPACE LOCKING" OPERATING SYSTEMS REVIEW (SIGOPS), ACM HEADQUARTER. NEW YORK, US, vol. 28, no. 3, 1 July 1994 (1994-07-01), pages 38-42, XP000460506

## Description

### FIELD OF THE INVENTION

The present invention relates to the facilitation of a global safepoint operation in a multithreaded computer system environment. In particular, the present invention relates to facilitating a global safepoint operation while avoiding suspending all threads during safepoint synchronization.

### BACKGROUND AND SUMMARY OF THE INVENTION

In computer science, the term "multitasking" refers to an operating system's ability to support multiprocesses simultaneously. A process is typically a program in execution. Support for multiple processes is necessary in applications where several computations proceed in parallel. In time-sharing systems, multiple users share a single computer system and all processes created by them should, at least in principle, execute simultaneously. Real time systems that control multiple devices also need to support multiple processes. For instance, an avionics computer on board an airplane runs processes for monitoring the engines, updating the flight instruments, processing radar signals, and keeping the airplane on course. Batch operating systems depend on multitasking for overlapping computation with input/output (I/O) operations. For instance, when a process performs I/O, the operating system may run another process to avoid idling the central processor for long periods of time.

One type of process is known as primitive process or threads. A single process may also include multiple threads. Typically, the simplest way to execute multiple threads simultaneously is to assign each thread to its own processor in a multiprocessor system. If the number of threads exceeds the number of processors, then processors must typically be multiplexed among threads. By switching a processor rapidly from one thread to the next, it appears to the observer as if all threads are making progress, even if the processor can execute only one instruction at a time. While processor multiplexing typically implements only quasi-parallelism, peripheral devices can provide true parallelism even if the computer system contains only a single, central processor. Peripheral devices can be regarded as specialized processor that operate concurrently with the central processor. A device runs a single process specialized, for example, for printing a line or writing a disk block. The device receives commands from a device driver process that itself runs on the central processor. After a device driver has issued a command to a device, the driver waits for a completion signal. During this wait, the main processor typically switches its attention from the device driver to other threads.

While maintaining multiple threads, the computer system may need to perform global operations which require synchronization or control of all or a group of threads at a given time. An example of such a global operation is garbage collection.

Many programming languages and systems provide for dynamic as well as static allocation of memory storage to abstract data objects. The performance of these systems relies on their ability to reclaim and reuse storage for dynamically allocated objects after they are no longer needed by the executed program. Some language systems require programmers to return unneeded objects (garbage) to the memory system explicitly. Although this permits precise and efficient recycling of storage when performed carefully, it often results in objects being recycled prematurely or being forgotten and thus lost to the system. Other systems reclaim abandoned objects automatically through a process called " garbage collection". Reclaiming storage automatically in this way is both a convenience to the programmer and a means for insuring every object's storage is recycled correctly.

Garbage collection typically occurs in two phases: identifying unneeded objects, and then making their storage available for reallocation. An object in a program is needed, or live at a given time if the program might access the object in the future; otherwise it is dead. In practice, garbage collectors typically consider an object to be dead only if the program has abandoned all pointers to it, making future access impossible.

For a global operation, such as garbage collection, all the locations of objects and all locations of reference pointers typically need to be known to perform such a global operation. In a multithreaded environment, a "stop" instruction is typically sent to all threads prior to performing a global operation, such as garbage collection. Then it needs to be determined whether each thread is in a 'safe' region or an 'unsafe' region. A safe region is a region of code through which a thread is processing, wherein pointers are not being manipulated. An unsafe region is a region of the code through which the thread is processing wherein pointers may be manipulated. Conventionally, all threads are typically suspended ("thread suspends") in order to evaluate each thread and determine if each thread is in a safe or unsafe region. If a thread is in an unsafe region, then the thread operation is resumed and is stopped later to attempt to suspend it at a safe region.

Although thread suspends can be effective in some systems, typically, the more concurrent threads that are in use at any given time, the slower the suspend process progresses. Accordingly, suspend processes can be very expensive to perform on many of today's advanced processors. Additionally, many threads are in a situation such that they do not need to be suspended.. For example, when a thread is in a safe region, then that particular thread causes no problems for the performance of a global safepoint operation. However, conventionally, all the threads are suspended in order to evaluate and determine whether each thread is in a safe or unsafe region.

U.S.-5,842,016 describes a method for synchronizing threads in a garbage-collected system. Each thread may enable or disable garbage collection. A synchronization facility receives a request to initiate garbage collection. In response to the request, the facility identifies threads that have enabled garbage collection more recently than they have disabled garbage collection. Then, until all of the threads are identified or suspended, the facility identifies threads that enable garbage collection and suspends threads that disable garbage collection. When all threads are identified or suspended, the facility performs garbage collection. The facility also suspends any identified threads that attempt to disable garbage collection during the performance of garbage collection.

It would be desirable to facilitate a global safepoint operation, without the need to suspend all threads. The present invention addresses such a need.

According to a first aspect of the invention, there is provided a method for facilitating a safepoint operation in a multi-threaded computer system, the method comprising: a first thread acquiring a safepoint lock in a safe region, the first thread being one of a plurality of threads each of which can acquire the safe point lock and wherein acquiring the safepoint lock ensures that only the thread acquiring the safepoint lock can perform the safe point operation; determining whether the others of the plurality of threads are in a safe region, an unsafe region or are beginning to transition out of a safe region into an unsafe region, without suspending the threads, by checking a state variable maintained by each of the threads which indicates whether a thread is in a safe, unsafe or transitional region, and if a thread is in an unsafe region, then suspending the thread, and if a thread begins to transition out of a safe region into an unsafe region, then blocking transition of the thread into the unsafe region; and the first thread waiting until all the other threads have reached a safe region before initiating the safepoint operation.

Each thread can keep track of its safepoint regions by maintaining a variable which indicates a state, such as whether the current region of the thread is safe, unsafe, or transitional. In this manner, it can be determined whether a thread is currently in a safepoint region without suspending the thread. When a thread is currently in a safepoint region, the thread can continue to operate while a global safepoint operation, such as garbage-collection is being performed. When the thread begins to transition out of the safe region, it moves into a transitional region.

The safepoint lock can block other threads from attempting to perform the safepoint procedure at the same time.

The method can comprise providing a state associated with a thread; determining if the state indicates a transition; and blocking an operation of the thread if the state indicates a predetermined type of transition and if a safepoint operation has been initiated.

In another aspect of the invention, there is provided a system for facilitating a safepoint operation in a computer system including at least one thread, the system comprising: means for a first thread acquiring a safepoint lock in a safe region, the first thread being one of a plurality of threads each of which can acquire the safe point lock and wherein acquiring the safepoint lock ensures that only the thread acquiring the safepoint lock can perform the safe point operation; means for determining if the others of the plurality of threads are in a safe region, an unsafe region, or is beginning to transition out of a safe region into an unsafe region, comprising a state variable maintained by each of the threads which indicates whether an associated thread is in a safe, unsafe or transitional region, and wherein the determination is made without suspending the thread; means for suspending a thread determined to be in an unsafe region; means for blocking transition of a thread determined to be beginning to transition out of a safe region into an unsafe region; and means for causing the first thread to wait until all the other threads have reached a safe region before initiating the safepoint operation.

In another aspect of the invention, there is provided computer program code for providing the method aspect of the invention and a computer program product including such computer program code.

### BRIEF DESCRIPTION OF THE DRAWINGS

Figure 1 is a block diagram of a computer system suitable for implementing the present invention.
Figure 2 is an illustration of a thread transitioning through safe and unsafe regions of a computer code.
Figure 3 is an illustration of threads progressing through a global safepoint operation according to an embodiment of the present invention.
Figure 4 is a flow diagram of a transition within a thread according to an embodiment of the present invention.
Figure 5 is a flow diagram of a method for blocking a thread according to an embodiment of the present invention.
Figure 6 is a flow diagram of a method for implementing a notify block according to an embodiment of the present invention.
Figure 7A - 7E are flow diagrams of a method for safepoint synchronization according to an embodiment of the present invention.

### DETAILED DESCRIPTION OF THE PREFERRED EMBODIMENTS

The following description is presented to enable one of ordinary skill in the art to make and to use the invention and is provided in the context of a patent application and its requirements. Various modifications to the preferred embodiments will be readily apparent to those skilled in the art and the generic principles herein may be applied to other embodiments. Thus, the present invention is not intended to be limited to the embodiment shown but is to be accorded the widest scope consistent with the principles and features described herein.

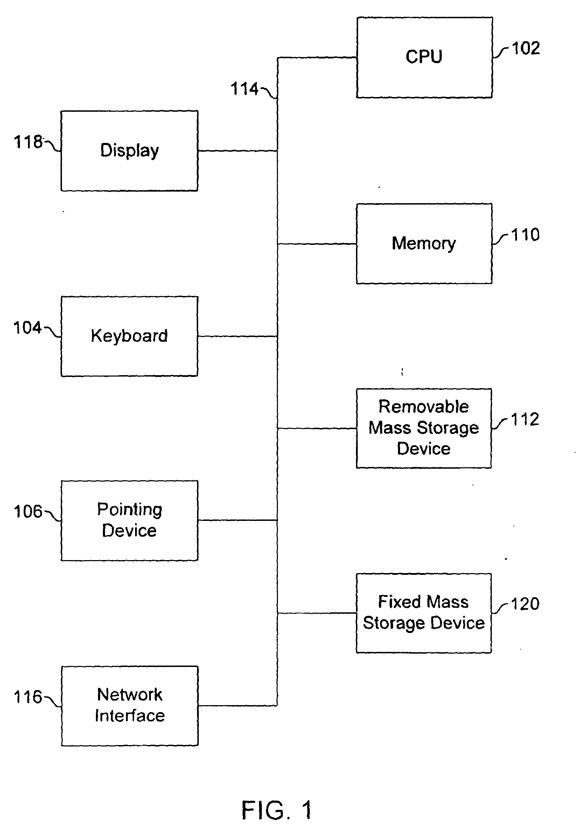

Figure 1 is a block diagram of a general purpose computer system 100 suitable for carrying out the processing in accordance with one embodiment of the present invention. Figure 1 illustrates one embodiment of a general purpose computer system. Other computer system architectures and configurations can be used for carrying out the processing of the present invention. Computer system 100, made up of various subsystems described below, includes at least one microprocessor subsystem (also referred to as a central processing unit, or CPU) 102. That is, CPU 102 can be implemented by a single-chip processor or by multiple processors. CPU 102 is a general purpose digital processor which controls the operation of the computer system 100. Using instructions retrieved from memory 110, the CPU 102 controls the reception and manipulation of input data, and the output and display of data on output devices.

CPU 102 is coupled bi-directionally with memory 110 which can include a first primary storage, typically a random access memory (RAM), and a second primary storage area, typically a read-only memory (ROM). As is well known in the art, primary storage can be used as a general storage area and as scratch-pad memory, and can also be used to store input data and processed data. It can also store programming instructions and data, in the form of data objects and text objects, in addition to other data and instructions for processes operating on CPU 102. Also as well known in the art, primary storage typically includes basic operating instructions, program code, data and objects used by the CPU 102 to perform its functions. Primary storage devices 110 may include any suitable computer-readable storage media, described below, depending on whether, for example, data access needs to be bi-directional or uni-directional. CPU 102 can also directly and very rapidly retrieve and store frequently needed data in a cache memory (not shown).

A removable mass storage device 112 provides additional data storage capacity for the computer system 100, and is coupled either bi-directionally or uni-directionally to CPU 102. For example, a specific removable mass storage device commonly known as a CD-ROM typically passes data uni-directionally to the CPU 102, whereas a floppy disk can pass data bi-directionally to the CPU 102. Storage 112 may also include computer-readable media such as magnetic tape, flash memory, signals embodied on a carrier wave, PC-CARDS, portable mass storage devices, holographic storage devices, and other storage devices. A fixed mass storage 120 can also provide additional data storage capacity. The most common example of mass storage 120 is a hard disk drive. Mass storage 112, 120 generally store additional programming instructions, data, and the like that typically are not in active use by the CPU 102. It will be appreciated that the information retained within mass storage 112, 120 may be incorporated, if needed, in standard fashion as part of primary storage 110 (e.g. RAM) as virtual memory.

In addition to providing CPU 102 access to storage subsystems, bus 114 can be used to provide access other subsystems and devices as well. In the described embodiment, these can include a display monitor 118, a network interface 116, a keyboard 104, and a pointing device 106, as well as an auxiliary input/output device interface, a sound card, speakers, and other subsystems as needed. The pointing device 106 may be a mouse, stylus, track ball, or tablet, and is useful for interacting with a graphical user interface.

The network interface 116 allows CPU 102 to be coupled to another computer, computer network, or telecommunications network using a network connection as shown. Through the network interface 116, it is contemplated that the CPU 102 might receive information, *e.g.*, data objects or program instructions, from another network, or might output information to another network in the course of performing the above-described method steps. Information, often represented as a sequence of instructions to be executed on a CPU, may be received from and outputted to another network, for example, in the form of a computer data signal embodied in a carrier wave. An interface card or similar device and appropriate software implemented by CPU 102 can be used to connect the computer system 100 to an external network and transfer data according to standard protocols. That is, method embodiments of the present invention may execute solely upon CPU 102, or may be performed across a network such as the Internet, intranet networks, or local area networks, in conjunction with a remote CPU that shares a portion of the processing. Additional mass storage devices (not shown) may also be connected to CPU 102 through network interface 116.

An auxiliary I/O device interface (not shown) can be used in conjunction with computer system 100. The auxiliary I/O device interface can include general and customized interfaces that allow the CPU 102 to send and, more typically, receive data from other devices such as microphones, touch-sensitive displays, transducer card readers, tape readers, voice or handwriting recognizers, biometrics readers, cameras, portable mass storage devices, and other computers.

In addition, embodiments of the present invention further relate to computer storage products with a computer readable medium that contain program code for performing various computer-implemented operations. The computer-readable medium is any data storage device that can store data which can thereafter be read by a computer system. The media and program code may be those specially designed and constructed for the purposes of the present invention, or they may be of the kind well known to those of ordinary skill in the computer software arts. Examples of computer-readable media include, but are not limited to, all the media mentioned above: magnetic media such as hard disks, floppy disks, and magnetic tape; optical media such as CD-ROM disks; magneto-optical media such as floptical disks; and specially configured hardware devices such as application-specific integrated circuits (ASICs), programmable logic devices (PLDs), and ROM and RAM devices. The computer-readable medium can also be distributed as a data signal embodied in a carrier wave over a network of coupled computer systems so that the computer-readable code is stored and executed in a distributed fashion. Examples of program code include both machine code, as produced, for example, by a compiler, or files containing higher level code that may be executed using an interpreter.

The computer system shown in Fig. 1 is but an example of a computer system suitable for use with the invention. Other computer systems suitable for use with the invention may include additional or fewer subsystems. In addition, bus 114 is illustrative of any interconnection scheme serving to link the subsystems. Other computer architectures having different configurations of subsystems may also be utilized.

The present invention is a system and method for facilitating a global safepoint operation in a multithreaded computer system. According to an embodiment of the present invention, each thread keeps track of its safepoint regions by maintaining a variable which indicates a state, such as whether the current region of the thread is safe, unsafe, or transitional. In this manner, it can be determined whether a thread is currently in a safepoint region without suspending the thread. When a thread is currently in a safepoint region, the thread can continue to operate while a global safepoint operation, such as garbage-collection is being performed. When the thread begins to transition out of the safe region, it moves into a transitional region. The transitional region automatically blocks the transition into the non-safe region to assure that the safepoint operation occurs in a safe region.

According to an embodiment of the present invention, one thread may begin a safepoint procedure after it acquires a safepoint lock. The safepoint lock blocks other threads from attempting to perform the safepoint procedure at the same time. Prior to initiating a safepoint operation, the thread attempting to initiate the safepoint operation will wait until all other threads reach a safe region in each of their own code.

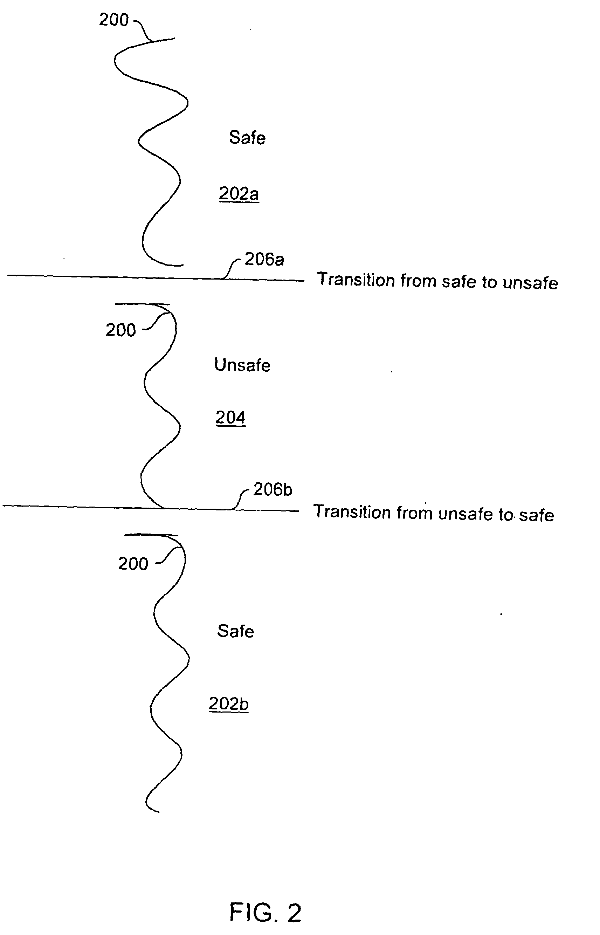

Figure 2 is an illustration of a thread transitioning between safe and unsafe regions of a computer code. Figure 2 shows thread 200 transitioning from a safe region 202A to an unsafe region 204 via a transition region 206A. The transition region 206A is a transition from a safe region to an unsafe region. The thread 200 is also shown to transition from the unsafe region 204 to a safe region 202B via a transition region 206B, wherein the transition region 206B is a transition from an unsafe region to a safe region.

If thread 200 is in a safe region, such as safe regions 202A and 202B, a global safepoint operation, such as garbage collection, may proceed while thread 200 continues to operate. When thread 200 reaches the transition region 206A, transitioning from a safe region to an unsafe region, thread 200 may be blocked from continuing into the unsafe region 204 to insure that thread 200 stays in a safe region during the global safepoint operation.

According to an embodiment of the present invention, if thread 200 is in unsafe region 204, then thread 200 is allowed to continue through unsafe region 204 and the global safepoint operation is not initiated. As previously mentioned, unsafe regions are regions of code through which a thread is passing wherein pointers may be manipulated. Examples of unsafe regions include virtual machine code, Java^{™} code, and code which is unidentified. The Java^{™} code may include compiler code and interpretive code.

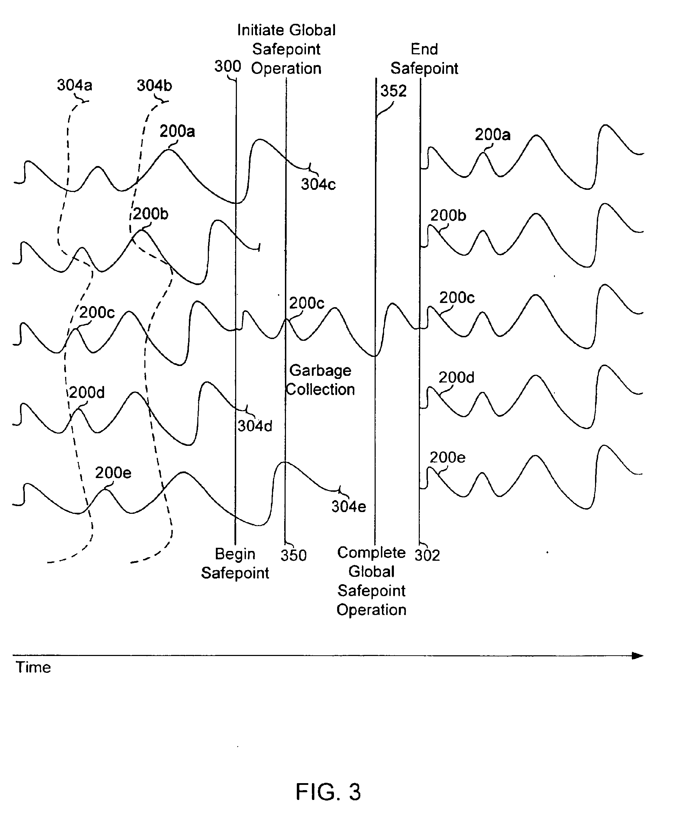

When thread 200 enters the transition region 206B, transitioning from an unsafe area to a safe area, a waiting counter is decremented. Further details of the waiting counter will later be discussed in conjunction with the remaining figures, such as Figure 3.

Figure 3 is an illustration of a set of threads progressing through a global safepoint operation according to an embodiment of the present invention. Figure 3 shows a set of threads 200A-200E, each progressing through their own set of computer codes. Points 304A and 304B represent state transitions for each thread 200A-200E. For example, point 304A for thread 200A may be a transition from a safe region to an unsafe region, while point 304A for thread 200B may be a transition from an unsafe region to a safe region. Likewise, point 304B for thread 200D may be a transition from an unsafe region to a safe region, while point 304B for thread 200E may be a transition from a safe region to an unsafe region.

Assume that it is desirable to perform a global safepoint operation, such as garbage collection, for thread 200C. The global safepoint operation is expected to be programmed such that it is code which is considered to be a safe region. Accordingly, when thread 200C initiates begin safepoint 300, it is assumed that thread 200C is moving through a safe region of code. Thus, thread 200C's state flag should not need to be checked.

Thread 200C then acquires a safepoint lock at begin safepoint 300. Since thread 200C is the thread which initiates the safepoint operation, it is often herein referred to as the initiating thread. The safepoint lock ensures that thread 200C is the only thread allowed to perform the global safepoint operation, thus avoiding simultaneous attempts at performing global safepoint operations by different threads. Additionally, since the remaining threads 200A-200B, 200D-200E cannot acquire the safepoint lock, an attempt to acquire the safepoint lock by the remaining threads 200A-200B, 200D-200E will block further progress by these threads. Accordingly, when the remaining threads 200A-200B, 200D-200E move into a transition region from a safe region, they may be blocked from progressing further into an unsafe region by causing these threads to attempt to acquire the safepoint lock.

After acquiring the safepoint lock, thread 200C then waits until every other thread 200A, 200B, 200D, 200E, has reached a safe region within their code. When a remaining thread 200A-200B, 200D-200E transitions from an unsafe region (such as region 204 of Figure 2) to a safe region (such as region 202B of Figure 2), a waiting counter is decremented to indicate that this thread is one less thread for thread 200C to wait upon. If any of the remaining threads 200A, 200B, 200D, 200E are in safe regions, they continue to progress until each of those threads runs into a transition region from a safe region to an unsafe region. When a thread moves into such a transition, it is blocked to keep it from progressing out of the safe region and into an unsafe region. When all the threads 200A-200E are in safe regions, or are blocked at transitions from a safe region to an unsafe region, then the global safepoint operation, such as garbage collection, may be initiated.

For example, assume that at point 304B, thread 200A transitions into a safe region. Then thread 200A may continue to operate after begin safepoint 300 until it reaches a transition state 304C. When begin safepoint 300 is initiated, thread 200A's state flag will be checked to determine the type of region thread 200A is moving through. In this example, thread 200A's state flag will indicate that it is in a safe region. At transition state 304C, thread 200A will be blocked to ensure that it does not move into an unsafe region during the global safepoint operation.

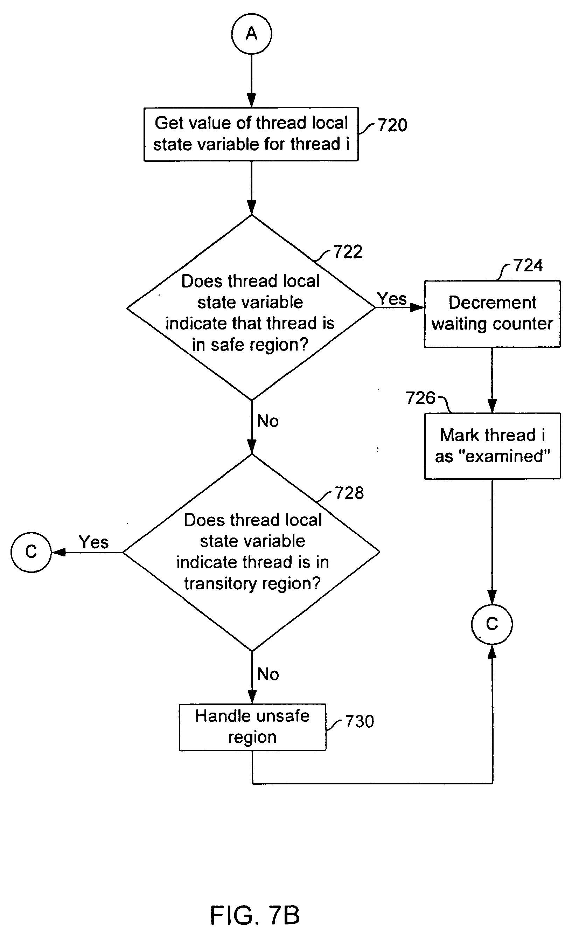

Assume also that thread 200B transitions into an unsafe region at point 304B. When begin safepoint 300 is initiated, thread 200B's state flag is checked to determine what type of region thread 200B is moving through. In this example, thread 200B' state flag will indicate that it is in an unsafe region. Thread 200B is then suspended and handled such that a safepoint operation may be performed. Further details of unsafe region handling will later be discussed in conjunction with Figures 7B-7D.

If thread 200D is in a transition from a safe region to an unsafe region at the time thread 200D's state flag is checked after begin safepoint 300 is initiated. Then the progress of thread 200D is blocked to keep thread 200D from moving into an unsafe region. If thread 200E is in a transition from an unsafe region to a safe region at the time thread 200D's state flag is checked (after begin safepoint 300 is initiated), then thread 200E is allowed to continue its progress. If thread 200E reaches another transition state indicating a transition into an unsafe region, then it is blocked at point 304E.

When all the threads 200A-200E are in safe regions, then the safepoint operation may be initiated at point 350. When the global safepoint operation is complete at point 352, then a variable is set such that threads 200A-200E are no longer blocked at transitions, the safepoint lock is released by the initiating thread 200C, and any threads which have been suspended are then unsuspended. When these tasks are complete, then the safepoint procedure is ended at point 302.

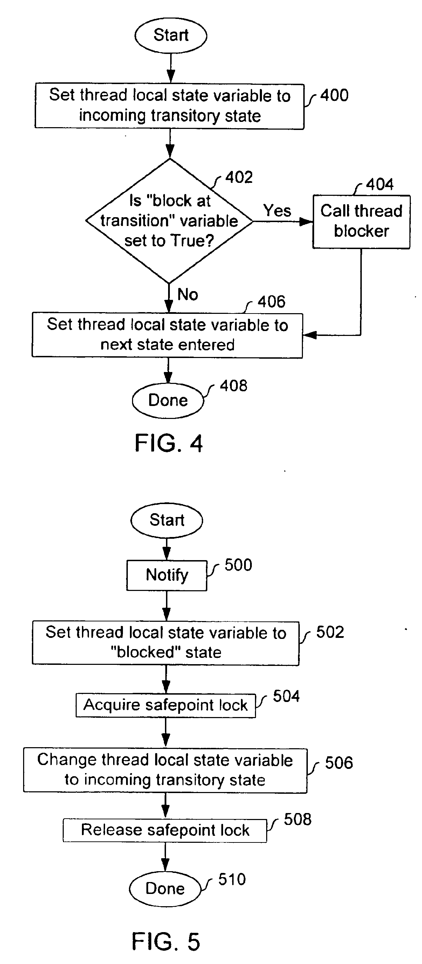

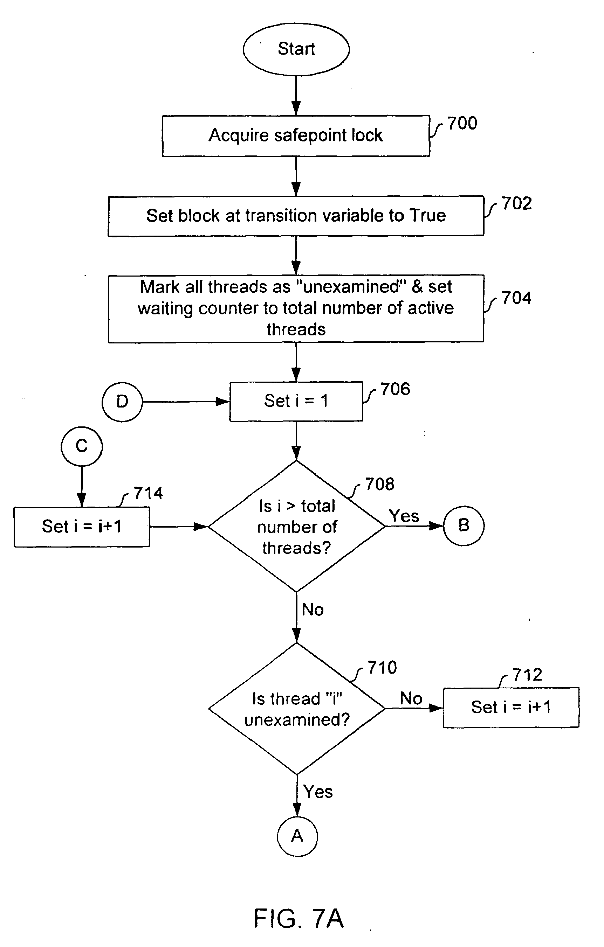

Figures 4-6 describe events which occur for each thread at checkpoints 304A - 304D of Figure 3, while Figures 7A-7E describe events which occur at begin and end safepoints 300 and 302 of Figure 3.

Figure 4 is a flow diagram of a transition between program code regions within a thread according to an embodiment of the present invention. A thread local state variable is set to an incoming transitory state in step 400. The thread local state variable may be a flag indicating the state of the region through which the thread is passing. For example, if a thread was transitioning from a safe region to an unsafe region, the transition region may be indicated by a number which sets the thread local state variable to indicate that it is a transition from a safe region to an unsafe region. Examples of other states which may be indicated by the thread local state variable include safe region, unsafe region, transition from a safe region to an unsafe region, and a transition from an unsafe region to a safe region.

It is then determined whether a variable, called "block at transition" variable, is set to true in step 402. The "block at transition" variable indicates whether a thread should be blocked at a transition region.

Note that a thread block is simpler and easier to perform than a thread suspend. When a thread is blocked, it simply does not proceed on to the next state or region, whereas when threads are suspended, the operating system typically must perform the suspend operation. Accordingly, it is simpler and less expensive to block a thread than to suspend the thread .

If "block at transition" variable is set to true in step 402, then a thread blocker is called in step 404. Details of the thread blocker will be discussed later in conjunction with figure 5. Thereafter, the thread local state variable is set to the next state which is entered by the thread in step 406.

If "block at transition" variable is not set to true in step 402, then thread local state variable is set to the next state (region) entered by the thread in step 406, and the transition is completed in step 408.

Figure 5 is a flow diagram of a method for blocking a thread according to an embodiment of the present invention. The flow diagram of Figure 5 occurs when the thread blocker is called in step 404 of Figure 4.

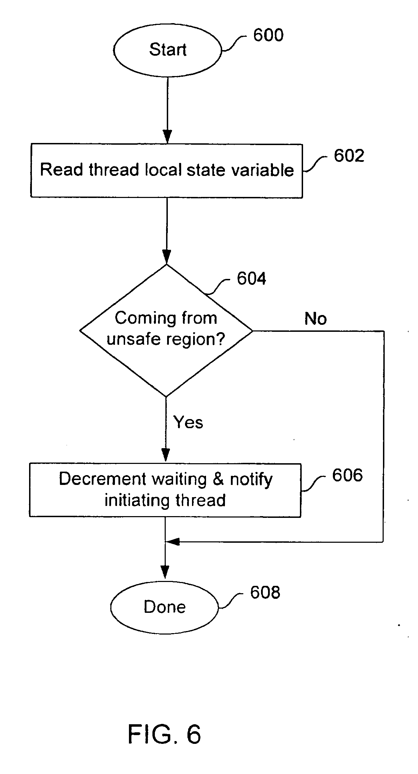

A notify block is implemented in step 500. Details of the implementation of the notify block will later be discussed in conjunction with Figure 6.

The thread local state variable is then set to a "blocked" state in step 502. A safepoint lock is then acquired in step 504. If the safepoint lock may not be immediately acquired (because the initiating thread has already acquired it), then it waits until the safepoint lock may be acquired. Waiting to acquire the safepoint lock keeps the thread in a "blocked" state by holding its position until the safepoint lock is acquired. The "blocked" state indicates to the initiating thread that this thread is in a safe region. The safepoint lock may only be acquired after the thread holding the safepoint lock releases it. Since the thread holding the safepoint lock will not release the safepoint lock until the global safepoint operation is completed, this thread is blocked throughout the global safepoint operation by waiting to acquire the safepoint lock.

The acquisition of a safepoint lock allows the initiating thread, such as thread 200C of Figure 3, to progress beyond the begin safepoint 300 and have the desired safepoint operation executed upon it, without the other threads 200A, 200B, 200D, and 200E accessing and interfering with the safepoint operation.

Once the safepoint lock has been acquired, the thread local state variable of this thread is then changed to the incoming transitory state in step 506. In this manner, the safepoint lock is acquired by each thread, one at a time, and each thread is allowed to move forward (transition into the next state). The safepoint lock is then released in step 508, and the thread blocker is completed in step 510.

Figure 6 is a flow diagram of the implementation of the notify block, such as the implementation of the notify block of step 500 of Figure 5. The notify block begins at step 600, and thread local state variable is read in step 602. It is then determined whether this thread is transitioning from an unsafe region in step 604. If the thread is not coming from an unsafe region, then the notify block is finished in step 608. If, however, the thread is coming from an unsafe region in step 604, then a waiting counter is decremented to notify the initiating thread that it need no longer wait for this particular thread to enter a safe region in step 606. Thereafter, the notify block is completed in step 608.

Figures 7A-7E are flow diagrams of safepoint synchronization according to an embodiment of the present invention. Figures 7A-7E represent events which occur during and between begin safepoint 300 and end safepoint 302 of Figure 3.

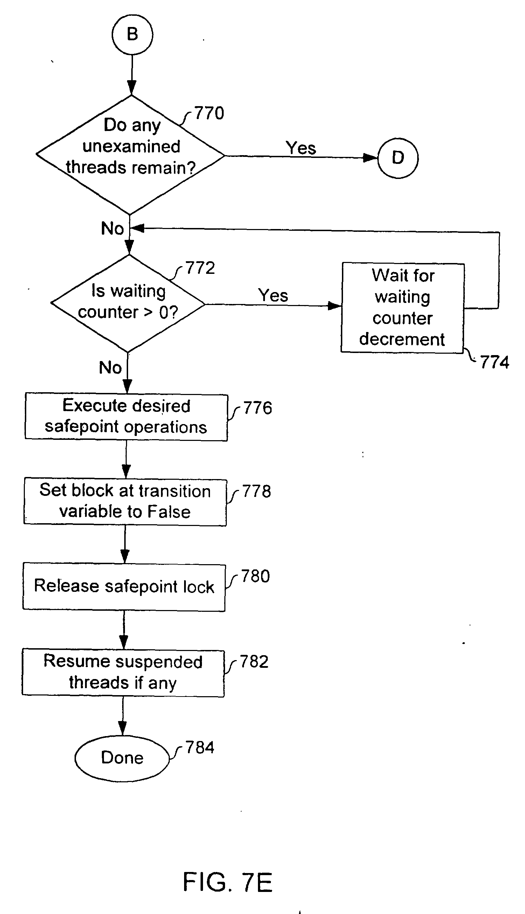

In Figure 7A, a safepoint lock is acquired in step 700. A "block at transition" variable is set to true in step 702. All threads are marked as " unexamined" and a waiting counter is set to equal the total number of active threads in step 704. A variable "i" is set equal to 1 in step 706, wherein "i" indicates a particular thread. It is then determined whether "i" equals the total number of threads in step 708. If "i" does equal the total number of threads in step 708, then the flow diagram shown on Figure 7E is referenced.

If, however, "i" does not equal the total number of threads in step 708, then it is determined whether thread "i" is unexamined in step 710. If thread "i" is not unexamined in step 710, then "i" is set equal to "i" + 1 in step 712. Thereafter, it is again determined whether "i" equals the total number of threads in step 708.

If, however, thread " i" is unexamined in step 710, then the flow diagram of Figure 7B is referenced. In Figure 7B, the value of the thread local state variable for thread "i" is retrieved in step 720. Recall that thread local state variable for thread "i" may be a flag indicating a state of the region through which thread "i" is running. It is then determined whether the thread local state variable indicates that thread "i" is in a safe region in step 722. If thread "i" is in a safe region in step 722, then the waiting counter is decremented in step 724. Thread "i" is then marked as "examined" in step 726. Thereafter, Figure 7A is again referred at point C which leads into step 714 which sets "i" equal to "i" + 1. Thereafter, it is again determined whether "i" equals the total number of threads in step 708.

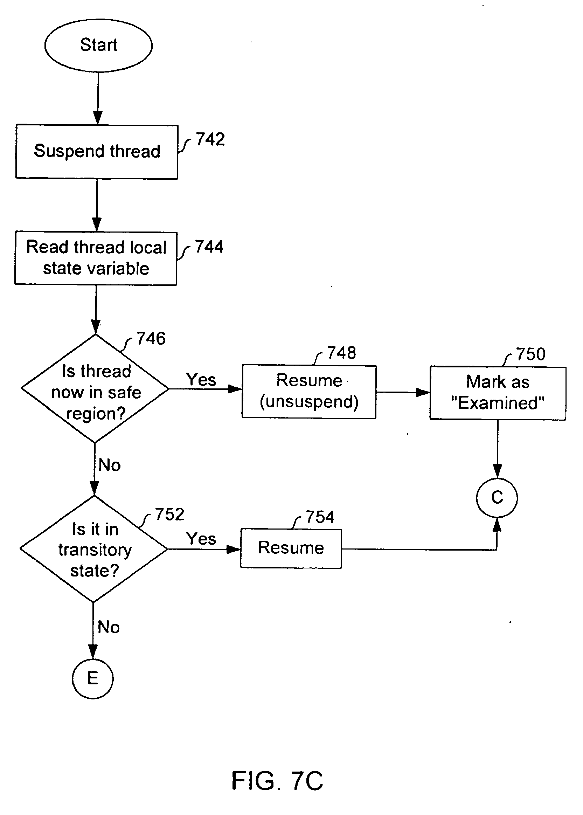

If the thread local state variable indicates that thread "i" is not in a safe region in step 722, then it is determined whether the thread local state variable indicates that thread "i" is in a transitory region in step 728. If thread "i" is in a transitory region in step 728, then Figure 7A is then again referenced at point C, and "i" is set equal to "i" + 1 in step 714. If, however, thread "i" is not in a transitory region in step 728, then the unsafe region will be handled in step 730. The handling of an unsafe region will later be discussed in conjunction with Figure 7C. Thereafter, Figure 7A is again referenced at point C and "i" is set equal to "i" + 1 in step 714.

Figure 7C is a flow diagram of a method for handling unsafe regions, such as step 730 of Figure 7B, according to an embodiment of the present invention. The thread that is in an unsafe region is suspended in step 742. The thread local state variable of thread "i" is then read in step 744. Although the thread is initially in an unsafe region when the suspension of the thread is initiated, the thread may have moved into a safe region by the time the execution of the thread suspend is complete. Accordingly, the thread local state variable is checked again in step 744, and it is again determined if the thread is now in a safe region in step 746. If the thread is now in a safe region in step 746, then the thread is resumed (unsuspended) in step 748. The thread is then marked as "examined" in step 750. Thereafter, Figure 7A is again referenced at point C, and "i" is set equal to "i" + 1 in step 714.

If thread "i" is still not in a safe region in step 746, then it is determined whether thread "i" is in a transitory state in step 752. If it is determined that thread "i" is in an transitory state in step 752, then thread "i" is resumed (unsuspended) in step 754. Thread "i" is not marked as "examined" and is later reexamined to determine if it is in a safe region. Thereafter, Figure 7A is again referenced at point C, and "i" is set equal to "i" + 1 in step 714.

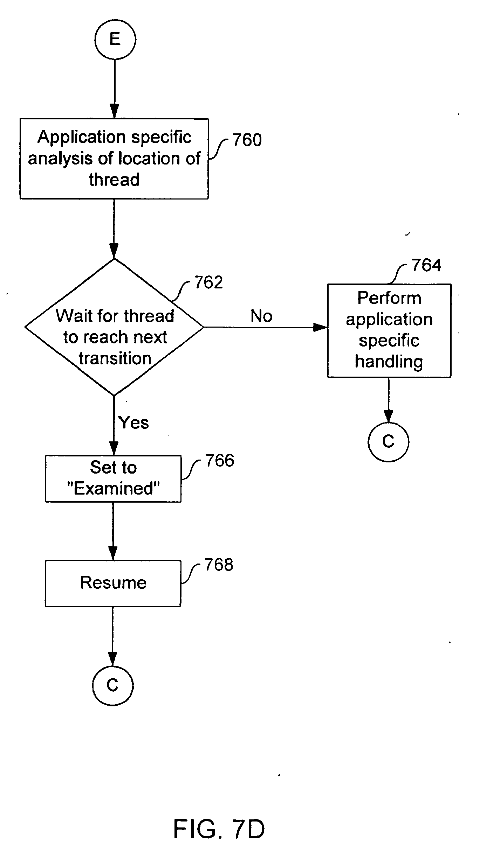

If, however, thread "i" is not in a transitory state in step 752, then the flow diagram of Figure 7D is referenced. In Figure 7D, an application specific analysis of the location of the thread is performed in step 760. The application specific analysis is user (programmer) configurable, depending on the application code through which the thread is running. In the example shown in Figure 7D, it is assumed that the application through which the thread is running is an unsafe region of interpretive code. For the example of the interpretive code, the application specific analysis may be that although the thread is running through an unsafe region, the thread may be allowed to continue to run since it may be assumed that the interpretive code will contain call backs to safe regions.

It is then determined whether to wait for the thread to reach the next transition in step 762. This determination may be made depending on the application specific analysis. For example, if the unsafe region is in a region of interpretive code, then according to our example, the determination would be made to wait for the thread to reach the next transition.

If it is determined not to wait for the thread to reach the next transition in step 762, then an application specific handling is performed in step 764. An example of application specific handling includes a situation where there are microsafe regions within an unsafe region. Microsafe regions are pockets of safe regions within an unsafe region. Microsafe regions indicate finer grained transitions than that which might be applied to other regions. These microsafe regions may have explicit checks indicating transitions (transitional regions). For example, if the unsafe region is in compile code, then the user (programmer) may prefer to use microtransitions to indicate microsafe regions within an unsafe region. If the thread is in a microsafe region within the compile code, then user (programmer) preference may be to roll ahead a few instructions until the thread reaches a microsafe region. Once a microsafe region is reached, this thread may be safe for a global safepoint operation.

If it is determined to wait for the thread to reach the next transition in step 762, then set thread "i" to "examined" in step 766. Thereafter, the progress of the thread is resumed (unsuspended) in step 768. Figure 7A is then again referenced at point C, and "i" is set equal to "i" + 1 and the next thread is examined. Note that the waiting counter was not decremented for this case where this thread was found to be in an unsafe region. When the thread reaches a transition from an unsafe region to a safe region, then the waiting counter will be decremented and the initiating thread will be notified, such as in step 606 of Figure 6.

Figure 7E is referenced when it is determined that "i" equals the total number of threads in step 708 of Figure 7A. If "i" equals the total number of threads in step 708, then it is determined whether any unexamined threads remain in step 770. If any unexamined threads remain, then Figure 7A is referenced at point D, and " i" is set equal to zero in step 706.

If there are no unexamined threads remaining in step 770, then it is determined whether the waiting counter is greater than zero in step 772. If the waiting counter is greater than zero in step 772, then there is a wait for the waiting counter to decrement in step 774. As previously mentioned in conjunction with Figure 3 and Figure 6, the waiting counter decrements when any of the threads moves through a transition region indicating a transition from an unsafe region to a safe region. After the waiting counter decrements, it is again determined whether the waiting counter is greater than the zero in step 772.

If the waiting counter is at zero in step 772, then all of the threads have been examined and are in safe regions. Accordingly, the desired global safepoint operation, such as garbage collection, may be executed in step 776. After the global safepoint operation is completed, the "block at transition" variable is then set to false to permit threads to move beyond transition regions and into unsafe regions in step 778. The safepoint lock is also released to permit another thread to obtain the safepoint lock in step 780. Finally, any suspended threads are resumed (unsuspended) if there were any suspended threads in step 782. At step 784, the process is completed.

A method and system for facilitating safepoint synchronization in a multi-threaded computer system environment has been disclosed. Software written according to the present invention may be stored in some form of computer-readable medium, such as memory or CD-ROM, or transmitted over a network, and executed by a processor.

## Claims

1. A method for facilitating a safepoint operation in a multi-threaded computer system, the method comprising:
a first thread (200c) acquiring a safepoint lock (700) in a safe region (202a), the first thread being one of a plurality of threads (200a, 200b, 200c, 200d, 200e) each of which can acquire the safepoint lock and wherein acquiring the safepoint lock ensures that only the thread acquiring the safepoint lock can perform the safe point operation;
determining whether the others of the plurality of threads are in a safe region (202a), an unsafe region (204) or are beginning to transition out of a safe region into an unsafe region, without suspending the threads, by checking a state variable maintained by each of the threads which indicates whether a thread is in a safe, unsafe or transitional region, and if a thread is in an unsafe region, then suspending the thread (742), and if a thread begins to transition out of a safe region into an unsafe region, then blocking transition of the thread into the unsafe region; and
the first thread waiting until all the other threads have reached a safe region before initiating the safepoint operation (776).

2. A method as recited in claim 1 wherein when it is determined that a thread is in a safe region, the thread being permitted to run when the safepoint operation is initiated.

3. The method of claim 1, wherein the thread is blocked by attempting to acquire the safepoint lock during a time when the first thread has already acquired the safepoint lock.

4. The method as recited in claim 1 and further comprising:
determining whether a selected thread (200a, 200e) of the others of the plurality of threads is in a safe region, the determination being made without suspending the selected thread;
continuing thread operation if the selected thread is in the safe region; and
initiating a safepoint operation (350) while the selected thread is continuing to operate.

5. The method of claim 4, further comprising detecting when the selected thread moves into a transition region from the safe region.

6. The method of claim 5, wherein the selected thread is blocked when the selected thread is in the transition region.

7. The method of any of claims 4-6, wherein the selected thread is blocked from moving out of the safe region.

8. The method of claim 7, wherein the selected thread is blocked by requiring that the selected thread acquires a safepoint lock before moving out of the safe region.

9. The method of any of claims 4-8, further comprising suspending the selected thread (200a, 200e) if the thread is in an unsafe region.

10. The method of any of claims 4-9, further comprising continuing the selected thread operation if the selected thread is in a transition from an unsafe region to a safe region, and initiating the safepoint operation only when the selected thread is in a safe region.

11. The method of any preceding claim, and further comprising:
determining if the state variable associated with a selected thread indicates that the selected thread is in a transition; and
blocking transition of the selected thread if the state variable indicates that the selected thread is beginning to transition out of a safe region into an unsafe region and if a safepoint operation has been initiated.

12. The method of claim 11, further comprising decrementing a waiting counter (606) if the state indicates a transition, wherein the transition is a transition from an unsafe region to a safe region.

13. The method of any of claims 11 to 12, wherein the state variable is a flag.

14. A system for facilitating a safepoint operation in a computer system including at least one thread, the system comprising:
means for a first thread (200c) acquiring a safepoint lock in a safe region (202a, 202b), the first thread being one of a plurality of threads each of which can acquire the safepoint lock and wherein acquiring the safepoint lock ensures that only the thread acquiring the safepoint lock can perform the safe point operation;
means for determining if the others of the plurality of threads (200a, 200b, 200d, 200e) are in a safe region, an unsafe region, or is beginning to transition out of a safe region into an unsafe region, comprising a state variable maintained by each of the threads which indicates whether an associated thread is in a safe, unsafe or transitional region, and wherein the determination is made without suspending the thread;
means for suspending a thread determined to be in an unsafe regions ;
means for blocking transition of a thread determined to be beginning to transition out of a safe region into an unsafe region; and
means for causing the first thread to wait until all the other threads have reached a safe region before initiating the safepoint operation (350),

15. The system of claim 14, wherein the means for determining comprises:
a data structure including a plurality of state variables.

16. The system of claim 15, further comprising a processor configured to read the plurality of state variables, the processor also being configured to determine if a thread is in a safe region without suspending the thread; the processor also being configured to initiate a safepoint operation if all the other threads are in a safe region.

17. Computer program code executable by a data processing device to provide the method of any of claims 1 to 13.

18. A computer program product for facilitating a safepoint operation in a computer system including at least one thread, the computer program product comprising computer program code as claimed in claim 17 and a computer readable medium that stores the computer program code.

19. The computer program product of claim 18, wherein the computer readable medium is selected from the group consisting of CD-ROM, floppy disk, tape, flash memory, system memory, hard drive, and data signal embodied in a carrier wave.

## Patentansprüche

1. Ein Verfahren zum Unterstützen einer Safepoint-Operation (Sicherheitspunktoperation) in einem multithreaded (Multi-Ausführungsstrang-) Computersystem, das Verfahren umfassend:
einen ersten Thread (Ausführungsstrang) (200c), der eine Safepoint-Sperre in einer sicheren Region (202a) erlangt, wobei der erste Thread einer aus einer Vielzahl von Threads (200a, 200b, 200c, 200d, 200e) ist, von denen jeder die Safepoint-Sperre erlangen kann, und wobei Erlangen der Safepoint-Sperre sicherstellt, dass nur der Thread, der die Safepoint-Sperre erlangt, die Safepoint-Operation durchführen kann;
Bestimmen, ob die anderen aus der Vielzahl von Threads in einer sicheren Region (202a), einer unsicheren Region (204) sind oder gerade einen Übergang aus einer sicheren Region heraus in eine unsichere Region beginnen, ohne Aufhebung der Threads, durch Prüfen einer Zustandsvariable, die durch jeden der Threads unterhalten wird, die anzeigt, ob ein Thread in einer sicheren, unsicheren oder Übergangsregion ist, und falls ein Thread in einer unsicheren Region ist, dann Aufheben des Threads (742), und falls ein Thread einen Übergang aus einer sicheren Region heraus in eine unsichere Region beginnt, dann Blockieren des Übergangs des Threads in die unsichere Region; und
wobei der erste Thread wartet, bis alle anderen Threads eine sichere Region erreicht haben, bevor die Safepoint-Operation (776) initiiert wird.

2. Ein Verfahren, wie in Anspruch 1 vorgetragen, wobei wenn bestimmt wird, dass ein Thread in einer sicheren Region ist, dem Thread erlaubt wird zu laufen, wenn die Safepoint-Operation initiiert wird.

3. Das Verfahren nach Anspruch 1, wobei der Thread blockiert wird, indem versucht wird, die Safepoint-Sperre während einer Zeit zu erlangen, wenn der erste Thread die Safepoint-Sperre bereits erlangt hat.

4. Das Verfahren, wie in Anspruch 1 vorgetragen, und ferner umfassend:
Bestimmen, ob ein ausgewählter Thread (200a, 200e) der anderen aus der Vielzahl von Threads in einer sicheren Region ist, wobei die Bestimmung ohne Aufhebung des ausgewählten Threads durchgeführt wird;
Fortsetzen der Thread-Operation, falls der ausgewählte Thread in der sicheren Region ist; und
Initiieren einer Safepoint-Operation (350), während der ausgewählte Thread gerade fortsetzt zu arbeiten.

5. Das Verfahren nach Anspruch 4, ferner umfassend Erfassen, wenn sich der ausgewählte Thread in eine Übergangsregion von der sicheren Region bewegt.

6. Das Verfahren nach Anspruch 5, wobei der ausgewählte Thread blockiert wird, wenn der ausgewählte Thread in der Übergangsregion ist.

7. Das Verfahren nach beliebigen von Ansprüchen 4-6, wobei der ausgewählte Thread blockiert wird, sich aus der sicheren Region heraus zu bewegen.

8. Das Verfahren nach Anspruch 7, wobei der ausgewählte Thread blockiert wird, indem gefordert wird, dass der ausgewählte Thread eine Safepoint-Sperre erlangt, bevor er sich aus der sicheren Region heraus bewegt.

9. Das Verfahren nach beliebigen von Ansprüchen 4-8, ferner umfassend Aufheben des ausgewählten Threads (200a, 200e), falls der Thread in einer unsicheren Region ist.

10. Das Verfahren nach beliebigen von Ansprüchen 4-9, ferner umfassend Fortsetzen der ausgewählten Thread-Operation, falls der ausgewählte Thread in einem Übergang ist von einer unsicheren Region zu einer sicheren Region, und Initiieren der Safepoint-Operation nur, wenn der ausgewählte Thread in einer sicheren Region ist.

11. Das Verfahren nach einem beliebigen vorangehenden Anspruch, und ferner umfassend:
Bestimmen, ob die Zustandsvariable, die mit einem ausgewählten Thread in Verbindung steht, anzeigt, dass der ausgewählte Thread in einem Übergang ist; und
Blockieren des Übergangs des ausgewählten Threads, falls die Zustandsvariable anzeigt, dass der ausgewählte Thread gerade einen Übergang aus einer sicheren Region heraus in eine unsichere Region beginnt und falls eine Safepoint-Operation initiiert wurde.

12. Das Verfahren nach Anspruch 11, ferner umfassend Dekrementieren eines Wartezählers (606), falls der Zustand einen Übergang anzeigt, wobei der Übergang ein Übergang von einer unsicheren Region zu einer sicheren Region ist.

13. Das Verfahren nach beliebigen von Ansprüchen 11 bis 12, wobei die Zustandsvariable ein Flag ist.

14. Ein System zum Unterstützen einer Safepoint-Operation in einem Computersystem, einschließlich mindestens eines Threads, das System umfassend:
Mittel für einen ersten Thread (200c), der eine Safepoint-Sperre in einer sicheren Region (202a, 202b) erlangt, wobei der erste Thread einer aus einer Vielzahl von Threads ist, von denen jeder die Safepoint-Sperre erlangen kann, und wobei Erlangen der Safepoint-Sperre sicherstellt, dass nur der Thread, der die Safepoint-Sperre erlangt, die Safepoint-Operation durchführen kann;
Mittel zum Bestimmen, ob die anderen aus der Vielzahl von Threads (200a, 200b, 200d, 200e) in einer sicheren Region, einer unsicheren Region sind, oder einen Übergang aus einer sicheren Region heraus in eine unsichere Region beginnt, umfassend eine Zustandsvariable, die durch jeden der Threads unterhalten wird, die anzeigt, ob ein zugehöriger Thread in einer sicheren, unsicheren oder Übergangsregion ist, und wobei die Bestimmung ohne Aufhebung des Threads durchgeführt wird;
Mittel zum Aufheben eines Threads, von dem bestimmt wird, in einer unsicheren Region zu sein;
Mittel zum Blockieren eines Übergangs eines Threads, von dem bestimmt wird, dass der gerade einen Übergang aus einer sicheren Region heraus in eine unsichere Region beginnt; und
Mittel zum Veranlassen, dass der erste Thread wartet, bis alle anderen Threads eine sichere Region erreicht haben, bevor die Safepoint-Operation (350) initiiert wird.

15. Das System nach Anspruch 14, wobei das Mittel zum Bestimmen umfasst:
eine Datenstruktur, die eine Vielzahl von Zustandsvariablen enthält.

16. Das System nach Anspruch 15, ferner umfassend einen Prozessor, der konfiguriert ist, die Vielzahl von Zustandsvariablen zu lesen, wobei der Prozessor auch konfiguriert ist zu bestimmen, ob ein Thread in einer sicheren Region ist ohne Aufhebung des Threads; wobei der Prozessor auch konfiguriert ist, eine Safepoint-Operation initiieren, falls alle anderen Threads in einer sicheren Region sind.

17. Computerprogrammcode, der durch eine Datenverarbeitungseinrichtung ausgeführt werden kann, um das Verfahren nach beliebigen von Ansprüchen 1 bis 13 vorzusehen.

18. Ein Computerprogrammprodukt zum Unterstützen einer Safepoint-Operation in einem Computersystem, einschließlich mindestens eines Threads, wobei das Computerprogrammprodukt umfasst Computerprogrammcode, wie in Anspruch 17 beansprucht, und ein computerlesbares Medium, das den Computerprogrammcode speichert.

19. Das Computerprogrammprodukt nach Anspruch 18, wobei das computerlesbare Medium aus der Gruppe ausgewählt wird, die aus CD-ROM, Floppy-Disk, Band, Flash-Speicher, Systemspeicher, Festplatte besteht, und ein Datensignal in einer Trägerwelle verkörpert ist.

## Revendications

1. Procédé destiné à faciliter la synchronisation à des points sûrs dans un système d'ordinateur à plusieurs fils d'exécution, le procédé comprenant :
un premier fil (200c) acquérant un verrou à des points sûrs (700) dans une zone sûre (202a), le premier fil étant un fil parmi une pluralité de fils (200a, 200b, 200c, 200d, 200e), chacun d'entre eux pouvant acquérir le verrou à des points sûrs, et dans laquelle acquérir le verrou à des points sûrs garantit que seul le fil acquérant le verrou à des point sûrs peut exécuter la synchronisation à des points sûrs ;
la détermination si les autres fils parmi la pluralité de fils sont dans un zone sûre (202e), une zone non sûre (204) ou s'ils commencent une transition d'une zone sûre vers une zone non sûre, sans suspendre les fils, en vérifiant une variable d'état maintenue par chacun des fils qui indique si un fil est dans une zone sûre, non sûre ou transitionnelle, et si un fil est dans une zone non sûre, en suspendant alors le fil (742), et si un fil commence sa transition d'une zone sûre vers une zone non sûre, en bloquant alors la transition du fil vers la zone non sûre ; et
le premier fil attendant que tous les autres fils aient atteint une zone sûre avant de commencer la synchronisation à des points sûrs (776).

2. Procédé selon la revendication 1, dans lequel quand il est déterminé qu'un fil est dans une zone sûre, le fil obtient l'autorisation de s'exécuter quand la synchronisation à des points sûrs est amorcée.

3. Procédé selon la revendication 1, dans lequel le fil est bloqué en essayant d'acquérir le verrou à des points sûrs à un moment où le premier fil a déjà acquis le verrou à des points sûrs.

4. Procédé selon la revendication 1, et comprenant en outre :
la détermination si un fil sélectionné (200a, 200e) parmi les autres fils de la pluralité de fils est dans une zone sûre, la détermination étant faite sans suspendre le fil sélectionné ;
la continuation de la synchronisation des fils si le fil sélectionné est dans une zone sûre ; et
l'amorçage d'une synchronisation à des points sûrs (350) alors que le fil sélectionné continue à synchroniser.

5. Procédé selon la revendication 4, comprenant en outre une détection quand le fil sélectionné passe dans une zone de transition à partir de la zone sûre.

6. Procédé selon la revendication 5, dans lequel le fil sélectionné est bloqué quand le fil sélectionné est dans la zone de transition.

7. Procédé selon l'une quelconque des revendications 4 à 6, dans lequel le fil sélectionné est bloqué contre la sortie de la zone sûre.

8. Procédé selon la revendication 7, dans lequel le fil sélectionné est bloqué en imposant que le fil sélectionné acquière un verrou à des points sûrs avant de sortir de la zone sûre.

9. Procédé selon l'une quelconque des revendications 4-8, comprenant en outre une suspension du fil sélectionné (200a, 200 e) si le fil est dans une zone non sûre.

10. Procédé selon l'une quelconque des revendications 4 à 9, comprenant en outre la continuation de la synchronisation du fil sélectionné si le fil sélectionné est en transition d'une zone non sûre vers une zone sûre, et l'amorçage de la synchronisation à des points sûrs seulement si le fil sélectionné est dans une zone sûre.

11. Procédé selon l'une quelconque des revendications précédentes, et comprenant en outre:
la détermination si la variable d'état associée au fil sélectionné indique que le fil sélectionné est en transition ; et
le blocage de la transition du fil sélectionné si la variable d'état indique que le fil sélectionné commence sa transition d'une zone sûre vers une zone non sûre et si la synchronisation à des points sûrs a été amorcée.

12. Procédé selon la revendication 11, comprenant en outre, une décrémentation d'un compteur d'attente (606) si l'état indique une transition, dans laquelle la transition est une transition d'une zone non sûre à une zone sûre.

13. Procédé selon l'une quelconque des revendications 11 à 12, dans lequel la variable d'état est un indicateur.

14. Système destiné à faciliter une synchronisation à des points sûrs dans un système d'ordinateur à au moins un fil, le système comprenant :
des moyens pour un premier fil (200c) d'acquérir un verrou à des points sûrs dans une zone sûre (202a, 202b), le premier fil étant un fil parmi une pluralité de fils, chacun d'entre eux pouvant acquérir le verrou à des points sûrs, et dans lequel acquérir le verrou à des points sûrs garantit que seul le fil acquérant le verrou à des point sûrs peut exécuter la synchronisation à des points sûrs ;
des moyens pour définir si les autres fils parmi la pluralité de fils (200a, 200b, 200d, 200e) sont dans un zone sûre, une zone non sûre ou s'ils commencent une transition d'une zone sûre vers une zone non sûre, comprenant une variable d'état maintenue par chacun des fils qui indique si un fil associé est dans une zone sûre, non sûre ou transitionnelle, et dans lequel la détermination est faite sans suspendre le fil ;
des moyens pour suspendre un fil déterminé pour être dans une zone non sûre;
des moyens pour bloquer la transition d'un fil déterminé pour commencer sa transition d'une zone sûre vers une zone non sûre ; et
des moyens pour faire attendre le premier fil jusqu'à ce que tous les fils aient atteint une zone sûre avant d'amorcer la synchronisation à des points sûrs (350).

15. Système selon la revendication 14, dans lequel les moyens de détermination comprennent :
une structure de données incluant une pluralité de variables d'état.

16. Système selon la revendication 15, comprenant en outre un processeur configuré pour lire la pluralité de variables d'état, le processeur étant aussi configuré pour déterminer si un fil est dans une zone sûre sans suspendre le fil ; le processeur étant aussi configuré pour amorcer une synchronisation à des points sûrs si tous les autres fils sont dans une zone sûre.

17. Code de programme informatique exécutable par un dispositif de traitement de données pour fournir le procédé selon l'une quelconque des revendications 1 à 13.

18. Produit de programme informatique destiné à faciliter une synchronisation à des points sûrs dans un système d'ordinateur incluant au moins un fil, le produit de programme informatique comprenant un code de programme informatique comme revendiqué dans la revendication 17 et un support de lecture informatique qui stocke le code de programme informatique.

19. Produit de programme informatique selon la revendication 18, dans lequel le support de lecture informatique est sélectionné à partir du groupe constitué d'un CD-ROM, d'une disquette, d'une bande, d'une mémoire flash, d'une mémoire système, d'un disque dur, et d'un signal de données incorporé dans une onde porteuse.
